# EUROPEAN PATENT SPECIFICATION

(11) **EP 4 362 211 B1**
(45) Date of publication and mention of the grant of the patent: **06.05.2026**
(21) Application number: 22878849.3
(22) Date of filing: 04.10.2022
(51) Int. Cl.: H01M 10/04, H01M 50/105, H01M 50/536, H01M 50/54

(54) **ELECTRODE ASSEMBLY AND MANUFACTURING METHOD OF THE SAME, BATTERY CELL INCLUDING THE SAME**
ELEKTRODENANORDNUNG UND HERSTELLUNGSVERFAHREN DAFÜR, BATTERIEZELLE DAMIT
ENSEMBLE D'ÉLECTRODES ET SON PROCÉDÉ DE FABRICATION, CELLULE DE BATTERIE LE COMPRENANT

(30) Priority: 05.10.2021 KR 20210131841; 29.09.2022 KR 20220124170
(43) Date of publication of application: 01.05.2024
(73) Proprietor: LG Energy Solution, Ltd., Seoul 07335 (KR)
(72) Inventor: BAN, Jeongjin, Daejeon 34122 (KR)
(74) Representative: Plasseraud IP
(86) International application number: PCT/KR2022/014904
(87) International publication number: WO 2023/059028

(56) References cited:
- JP-A- 2008 066 170
- JP-A- 2019 207 861
- JP-A- 2021 057 249
- KR-A- 20190 054 617
- KR-A- 20210 092 094
- KR-B1- 102 234 993

## Description

### [TECHNICAL FIELD]

The present disclosure relates to an electrode assembly, a manufacturing method of the same and a battery cell including the same, and more particularly to an electrode assembly that prevents disconnection of electrode tabs and a battery cell including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

The secondary battery may be classified based on the shape of a battery case into a cylindrical or prismatic battery wherein an electrode assembly is built into a cylindrical or prismatic metal can, and a pouch-type battery in which the electrode assembly is built into a pouch-shaped case made of a stacked aluminum sheet.

Further, the secondary battery may be classified based on the structure of an electrode assembly having a structure in which a cathode and an anode are stacked with a separator being interposed between the cathode and the anode. Typically, there may be mentioned a jelly-roll (wound) type structure in which long sheet type cathodes and long sheet type anodes are rolled with a separator being interposed between the cathode and the anode, a stacked (laminated) type structure in which pluralities of cathodes and anodes, cut into predetermined unit sizes, are sequentially stacked with separators being interposed between the cathodes and the anodes, or the like.

Meanwhile, in manufacturing a stacked electrode assembly built into in a pouch-type battery, the electrode tab portions coupled with the electrode leads are pressed together by tab guides and then pre-welded. Here, the tab guide may allow the electrode tabs to densely gather in the center so that the electrode tabs have a symmetrical shape, and the electrode tabs can densely gather on one side to have an asymmetrical shape. However, when the electrode tab is formed in an asymmetrical shape, there is a problem that the tension acting on each tab is different, and disconnection of the electrode tabs frequently occurs.

Document KR 102234993 B1 discloses a battery cell and a method for manufacturing the same, in which a dead space of the welding portion of the electrode tabs is reduced.

### [DETAILED DESCRIPTION OF THE INVENTION]

### [Technical Problem]

It is an object of the present disclosure to provide an electrode assembly that prevents disconnection of electrode tabs and a battery cell including the same.

However, the problem to be solved by embodiments of the present disclosure is not limited to the above-described problems, and can be variously expanded within the scope of the technical idea included in the present disclosure.

### [Technical Solution]

To solve this problem, the invention relates to an electrode assembly according to claim 1.

The electrode assembly after the invention may present one or more feature(s) of dependent claims 2 to 5, in any combination allowed by the claims.

The invention also relates to a manufacturing method according to claim 6.

The manufacturing method after the invention may present one of more feature(s) of dependent claims 7 to 9, in any combination allowed by the claims.

The invention further relates to a battery cell according to claim 10 and a pouch-type battery cell according to claim 11.

### [Advantageous Effects]

According to the embodiments, the electrode assembly of the present disclosure, a manufacturing method of the same, and a battery cell including the same can adjust the shape of the electrode tabs, thereby avoiding the tension acting on each tab from reaching a prescribed level or over.

### [BRIEF DESCRIPTION OF THE DRAWINGS]

Fig. 1 is a cross-sectional view showing a process of preparing the tab shape of the electrode assembly;
Fig. 2 is a cross-sectional view of an electrode assembly according to one embodiment of the present disclosure; and
Fig. 3 shows a cross section of an electrode assembly and a battery cell according to a tab shape.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, an electrode assembly according to one embodiment of the present disclosure will be described.

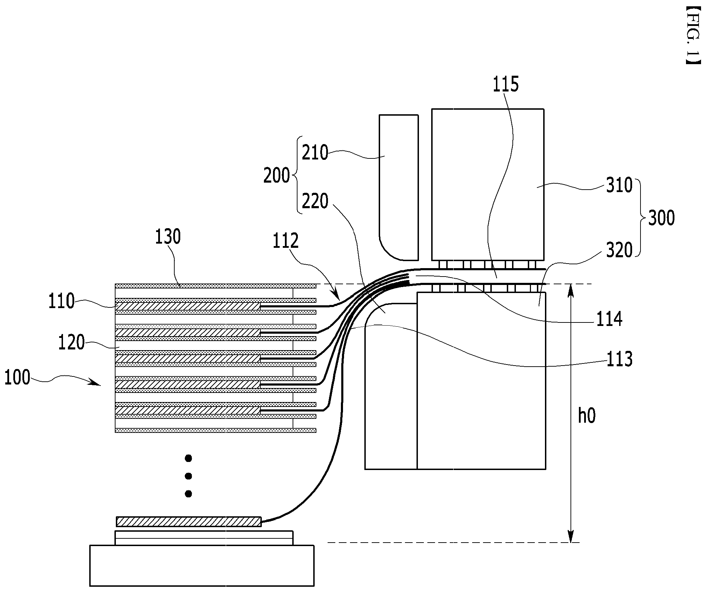

Fig. 1 is a cross-sectional view showing a process of preparing the tab shape of the electrode assembly.

The electrode assembly 100 of the present embodiment may be a power generating device capable of charging and discharging. The electrode included in the electrode assembly 100 may include a cathode 110 and an anode 120, and a separator 130 is interposed between the electrodes, so that an electrode assembly 100 can have a structure in which a cathode 110 / separator 130/ anode 120 are alternately stacked. The cathode 110 or the anode 120 may be an electrode in which a cathode active material or an anode active material is applied onto a current collector, and the separator 130 is made of an insulating material, and thus, can be for insulating electrically between the cathode 110 and the anode 120.

Further, the electrode assembly 100 shown in Fig. 1 may be configured such that a mono-cell in which a separator 130 / cathode 110 / separator 130 / anode 120 or a separator 130 / anode 120 / separator 130 / cathode 110 are stacked from the bottom, is manufactured into a unit cell and laminated in plural numbers, wherein a half-cell in which a separator 130 / anode 120 / separator 130 or a separator 130 / cathode 110 / separator 130 are stacked in the order may be laminated on the outermost part.

Electrode tabs may be located at one end of the electrode assembly 100 or at one end of the electrodes 110 and 120 included in the electrode assembly 100. The electrode tab may be a portion that extend in one or both directions from each electrode 110 or 120. The electrode tab may be a portion on which the electrode active material is not applied. Among the electrode tabs, the electrode tab connected to the cathode 110 may be referred to as a cathode tab 112, and an electrode tab connected to the anode 120 may be referred to as an anode tab. At this time, the cathode tab 112 is located at one end of the electrode assembly 100, and the anode tab may be located at the other end of the electrode assembly 100.

The electrode assembly 100 may be connected to electrode leads. The electrode tabs can be pressed in one position by a tab guide or the like and thus densely gathered, and the densely gathered electrode tabs can be joined through pre-welding. The densely gathered electrode tabs may be connected to electrode leads through welding or the like. The electrode tabs may have a symmetrical shape or an asymmetrical shape according to the position where the electrode tabs are densely gathered.

A process of forming the shape of the cathode tab 112 will be described in more detail below. The shape of the cathode tab 112 extending from the cathode 110 will be mainly described below, but it is not excluded by these descriptions that corresponding contents can also be applied to anode tabs.

In addition, it should be clarified in advance that in the following description, "expressions that refer to specific positions in the configuration, such as the uppermost end, the lowermost end, and lower surface" can be based on what is shown above and what is shown below in the cross section of the electrode assembly 100 shown in the figures.

Referring again to Fig. 1, the shape of the electrode tab can be formed by an electrode assembly manufacturing apparatus. The electrode assembly manufacturing apparatus may include a tab guide 200 for pressing an electrode tab and a pre-welding device 300. Here, the tab guide 200 includes a first guide 210 and a second guide 220, and can press the electrode tab to form the shape of the tab.

The cathode tab 112 extending from one end of the cathode 110 may be inserted between the first guide 210 and the second guide 220. The first guide 210 and the second guide 220 may press the cathode tab 112 by being brought close to each other. This allows the cathode tabs 112 to be densely gathered at one point, and each cathode tab 112 can be bent to be gathered at a point. The bent cathode tab 112 may form an angle with the longitudinal direction of the electrode assembly 100. In this manner, a portion where an inclination is formed by being densely gathered at one point in the electrode tab may be referred to as a 'tab inclined part 113', and a portion where the electrode tab is pressed may be referred to as a 'tab gathering part 114'.

The cathode tab 112 pressed by the tab guide 200 may be welded by the pre-welding device 300. The pre-welding device 300 may be a device capable of ultrasonic welding. The pre-welding device 300 providing ultrasonic welding may include a horn 310 and an anvil 320, and the electrode tabs extending from the tab gathering part 114 may be inserted and welded between the horn 310 and the anvil 320. In this manner, the electrode tabs that extend from the tab gathering part 114 and are welded may be referred to as a 'tab coupling part 115'. Meanwhile, the pre-welding device 300 only forms the tab coupling part 115 by heating both side surfaces of the electrode tab extending from the tab gathering part 114, so that the tab coupling part 115 is only formed, and is not for adjusting the shape thereof. Thus, the shape of the tab coupling part 115 may be mainly determined according to the shape of the tab gathering part 114.

The shape of the electrode tab can be determined according to the position at which the tab guide 200 presses the electrode tab. Depending on the centering position of the tab guide 200, the position of the tab gathering part 114 based on the stacking direction of the electrode assembly 100 can be determined, and the overall shape of the electrode tab can be determined. Here, the stacking direction may mean a direction in which electrodes and separators are stacked in the electrode assembly 100.

As shown in Fig. 1, when forming the tab gathering part 114, the centering position of the tab guide 200 can be set to match the position of the outermost electrode of the electrode assembly 100. Thereby, the position of the tab gathering part 114 based on the stacking direction of the electrode assembly 100 can correspond to the position of the outermost electrode of the electrode assembly 100. The position of the lower surface of the tab gathering part 114 or the tab coupling part 115 may correspond to the position of the outermost electrode of the electrode assembly 100.

When the position of the lower surface of the tab gathering part 114 is calculated as a 'height (h, not shown)' value of the tab gathering part 114 based on one surface of the electrode assembly 100, the height (h) of the tab gathering part 114 may have an initial height (h0) value which corresponds to the thickness value of the electrode assembly 100. The initial height h0 may be referred to as 'thickness of the electrode assembly 100' hereinafter.

However, the conventional centering position as shown in Fig. 1 is configured such that the position of the lower surface of the tab gathering part 114 corresponds to the position of the electrode located at the uppermost end of the electrode assembly 100, the upper surface of the tab gathering part 114 and/or the tab coupling part 115 can be located higher than the uppermost end of the electrode assembly 100. Thereby, in the electrode assembly 100, the tab gathering part 114 and/or the tab coupling part 115 may be lifted to the uppermost end of the electrode assembly 100.

Further, the electrode assembly 100 may be built into a battery cell pouch and manufactured as a pouch cell. When the tab gathering part 114 or the tab coupling part 115 is above the uppermost end of the electrode assembly 100 in this way, during the process of sealing the electrode assembly 100 into the battery cell case, some electrode tabs are pulled and thus disconnections can occur more easily. In addition, when the centering position is set as shown in Fig. 1, there is a problem that the electrode tabs, the tab guide 200 and the pre-welding device 300 may be interfered with each other even in the process of pressing and welding the electrode tabs.

Therefore, the present embodiment aims to provide an electrode assembly 100 and a manufacturing method thereof in which the above-described problems are minimized, by changing the shape of the electrode tab from the conventional one. The electrode assembly 100 of the present embodiment and the manufacturing method thereof can change the centering position of the tab guide 200, thereby changing the shape of the electrode tab (i.e., the position of the tab gathering part 114) and forming a margin on the electrode tab, and thus preventing disconnection of the electrode tabs.

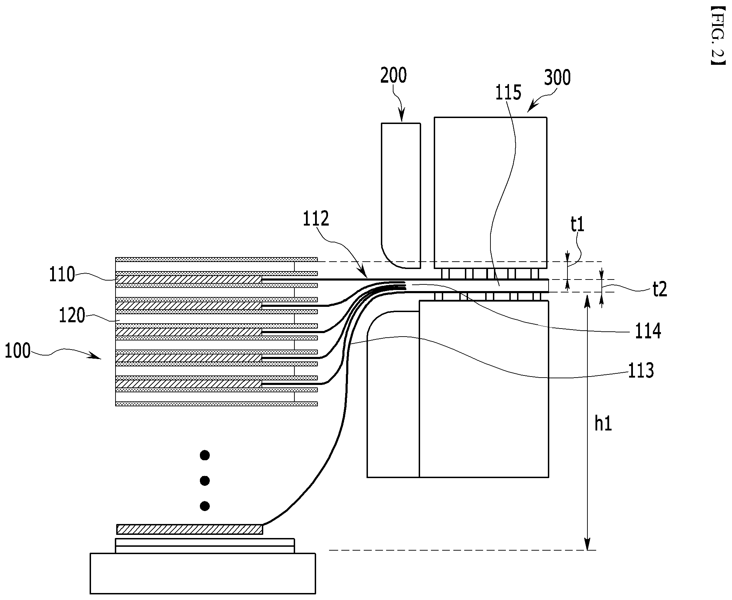

Next, the electrode assembly 100 of the present embodiment will be described in more detail with reference to Fig. 2.

Fig. 2 is a cross-sectional view of an electrode assembly according to one embodiment of the present disclosure.

Referring to Fig. 2, when the tab gathering part 114 is formed in the electrode assembly 100 of the present embodiment, the centering position of the tab guide 200 may be set to match a position separated from the outermost electrode by a predetermined distance. By adjusting the centering position, the position of the lower surface of the tab gathering part 114 can be located lower than the uppermost end of the electrode assembly 100, and can prevent a lifting phenomenon of the electrode tab described above. When the position of the lower surface of the tab gathering part 114 is calculated as the 'height (h) value of the tab gathering part 114' based on one surface of the electrode assembly 100', the height h of the tab gathering part 114 may have a first height h1 which is smaller than the initial height h0 which is the thickness of the electrode assembly 100.

Here, the predetermined distance may be referred to as a first distance. In Fig. 2, the first height h1, which is the height value of the lower surface of the tab gathering part 114, may correspond to the value which is obtained by subtracting the first distance from the initial height h0 corresponding to the thickness of the electrode assembly 100.

At this time, the first distance may be calculated in consideration of the thicknesses of the half cell located at the outermost part of the electrode assembly 100 and the electrode tab.

Specifically, in order for the tab gathering part 114 not to be lifted up, the centering position may need to be adjusted down by the thickness of the tab gathering part 114. The thickness of the tab gathering part 114 may correspond to the thickness of the cathode tabs 112, and may be referred to as the second thickness t2. That is, the centering position may need to be adjusted down by the second thickness t2 or by a value slightly larger or smaller than that.

Further, when the anode half-cell is located at the outermost part of the electrode assembly 100 as shown in Fig. 2, the centering position may need to be adjusted down by the thickness of the half-cell in order to prevent the tab gathering part 114 from being lifted up. The thickness of the half-cell may be referred to as a first thickness t1. That is, the centering position may have to be adjusted down by the first thickness t1 or by a value slightly larger or smaller than that.

Therefore, the first distance may correspond to the sum of the first thickness t1 and the second thickness t2. Here, 'corresponding' may mean including all cases where not only the first distance and the sum of the first thickness t1 and the second thickness t2 are the same, but also the first distance and the sum of the first thickness t1 and the second thickness t2 differ within a predetermined range. The first height h1 may correspond to a value which is obtained by subtracting the first thickness t1 and the second thickness t2 from the thickness h0 of the electrode assembly 100.

In particular, in the case of a pouch type battery cell, when one surface of the pouch is flat and the other surface houses the electrode assembly 100 (so-called 'one cup cell'), it is possible to prevent a lifting phenomenon of the electrode tab. At this time, it is possible to prevent a lifting phenomenon of the electrode tab 112 extending from the electrode 110 (cathode) having a polarity opposite to that of the electrode 120 (anode) included in the half cell located at the outermost part of the electrode assembly 100, and to keep the tab gathering part 114 flat.

For example, in the case of one cup pouch battery cell, the upper part of the outermost stack cell is a half-cell, and the half-cell has no cathode tab. When implemented as in the present disclosure, it is possible to prevent a lifting phenomenon of the electrode tab 112 extending from the cathode 110 of opposite polarity to the anode 120 included in the half-cell located at the outermost part of the electrode assembly 100, and to keep the tab gathering part 114 flat.

Next, experiments and results for selecting the optimized centering position and the position of the tab gathering part 114 will be described. The experiments described below are for setting an optimized centering position and for determining an appropriate first distance.

The thickness (h0) of the electrode assembly 100 used in the following experiments is 7.6 mm to 7.7 mm, and the thickness t1 of the half-cell located at the outermost part is 0.24 mm, and the thickness t2 of the cathode tabs 112 is 0.21 mm.

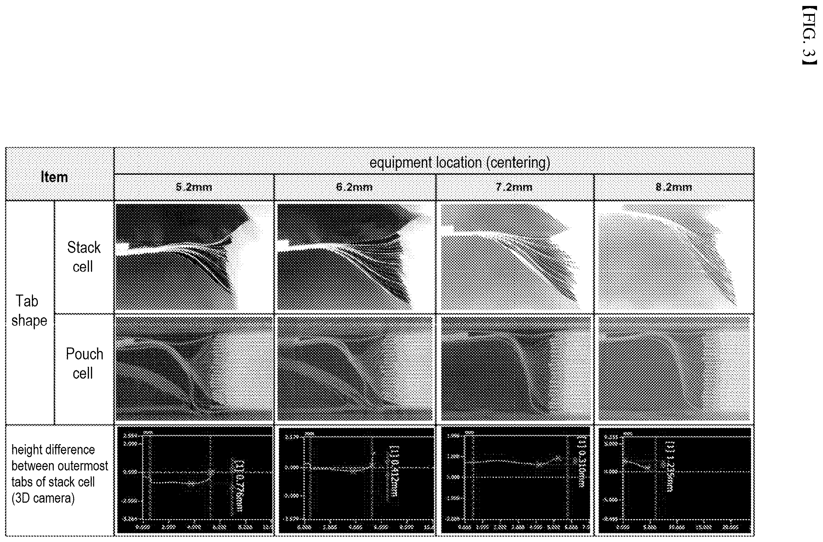

Fig. 3 shows a cross section of an electrode assembly and a battery cell according to a tab shape.

The table of Fig. 3 is for comparing the effect of the tab shape according to the height (h) of the tab gathering part 114, and shows four cases in which the height (h) values are 5.2 mm, 6.2 mm, 7.2 mm, and 8.2 mm.

At this time, since the sum of the first thickness t1 and the second thickness t2 is 0.45 mm, a value obtained by subtracting the sum of the first thickness t1 and the second thickness t2 from the thickness h0 of the electrode assembly 100 may be 7.15 mm to 7.25 mm. Therefore, 5.2mm can be expressed as [(h0)-{(t1)+(t2)+2}]mm, 6.2mm can be expressed as [(h0)-{(t1)+(t2)+1}]mm, 7.2mm can be expressed as [(h0)-{(t1)+(t2)}]mm, and 8.2mm can be expressed as [(h0)-{(t1)+(t2)-1}]mm. That is, the table of Fig. 3 describes cases in which the first distance differs from the sum of the first thickness t1 and the second thickness t2 by -1, 0, +1, and +2.

Further, the graph shown below in Fig. 3 is the result of measuring the shape of the electrode tab using a 3D camera, the horizontal axis is the measured distance, and the vertical axis is the depth value. Here, when the value of the vertical axis is large, that is, the depth value is large, this may mean that more larger margins were formed on the electrode tab by bending the shape of the tab.

Referring to the experimental results, when the height (h) value of the tab gathering part 114 is 5.2 mm or 6.2 mm, a phenomenon was observed in which the electrode tabs located at the lower part are pulled when the electrode assembly 100 is inserted into the cell case. Considering these points, when the height (h) value of the tab gathering part 114 is 6.2 mm or less, it can be confirmed that excessive tension acts on some of the electrode tabs of the battery cells, and it is highly likely to occur disconnection of the electrode tab.

Meanwhile, when the height (h) value of the tab gathering part 114 is 8.2 mm, the pre-welding process is performed at a relatively high position, so that a phenomenon in which the tab gathering part 114 or the tab coupling unit 115 is lifted above the outermost electrode may occur. Therefore, when the height (h) value of the tab gathering part 114 is 8.2 mm or more, similarly to the conventional electrode assemblies 100, the electrode assembly 100 is inserted into a cell case and then excessive tension can be applied to the electrode tabs located at the upper part, and thus, disconnection of the electrode tabs may occur.

However, when the height (h) value of the tab gathering part 114 is 7.2 mm, it was confirmed from the graph that the depth of the electrode tab has a large value as a whole, and it was not confirmed that even in cross-sectional photographs of the battery cell, excessive tension is generated in a specific tab. Therefore, compared to other cases, when the height (h) value of the tab gathering part 114 is 7.2 mm, it can be confirmed that an appropriate margin is formed on the electrode tab and disconnection of the electrode tab can be minimized.

Considering the above results, the height (h) value of the lower surface of the tab gathering part 114 based on one surface of the electrode assembly 100 may be greater than 6.2 mm and preferably smaller than 8.2 mm. The height (h) value of the lower surface of the tab gathering part 114 may be 6.3 mm or more and 8.1 mm or less, or it may be 6.7 mm or more and 7.7 mm or less, preferably, 7.15 mm to 7.25 mm.

Therefore, the appropriate height h of the tab gathering part 114, that is, the first height h1 value may be a value which is obtained by subtracting the first distance from the thickness h0 value of the electrode assembly 100, wherein the first distance is a value having a difference within 1 mm from the sum of the thickness t1 of the half cell and the thickness t2 of the cathode tabs 112. The first distance may be equal to or larger than {(t1)+(t2)-1} mm and equal to or less than {(t1)+(t2)+1} mm. The first height may be larger than [h0-{(t1)+(t2)+1}] (mm) and smaller than [h0-{(t1)+(t2)-1}] (mm). The first height is larger than [h0-{(t1)+(t2)+0.9}] (mm) and equal to or less than [h0-{(t1)+(t2)-0.9}] (mm). Alternatively, the first height may be equal to or larger than [h0-{(t1)+(t2)+0.5}] (mm) and equal to or less than [h0-{(t1)+(t2)-0.5}] (mm).

Next, a manufacturing method of an electrode assembly according to one embodiment of the present disclosure will be described. It should be clarified in advance that numbers such as S1000 represented by parentheses below are not shown in the figures, but are displayed so as to make each step easier to distinguish.

The manufacturing method of an electrode assembly described below can be performed by an electrode assembly manufacturing apparatus including the above-mentioned tab guide 200 and pre-welding device 300. The electrode assembly manufacturing apparatus described in the present embodiment may include a control unit, and the operation of the electrode assembly manufacturing apparatus can be controlled through the control unit. In addition, the electrode assembly manufacturing apparatus may further include a measuring unit, an input unit and/or a communication unit in addition to the control unit, wherein it is possible to measure the thickness or the like of the electrode assembly 100 via the measuring unit, receive information from the user via the input unit, and receive information from an external device via the communication unit. Further, information measured, inputted, or received by the electrode assembly manufacturing apparatus can be processed by the control unit.

The manufacturing method (S1000) of an electrode assembly of the present embodiment may comprises:
a step (S1100) of adjusting the centering position of ae tab guide 200 to a first height h1,
a step (S1200) of forming the tab gathering part 114, and
a step (S1300) of forming the tab coupling part 115.

In step S1100, the centering position of the tab guide 200 can be adjusted based on the first height h1.

Here, the first height h1 may be a value which is obtained by subtracting the first distance from the initial height h0 corresponding to the thickness of the electrode assembly 100. The first distance may be a value which corresponds to the sum of a first thickness t1 corresponding to the thickness of the half cell and a second thickness t2 corresponding to the thickness of the cathode tabs 112. More specifically, the first distance may be equal to or larger than {(t1)+(t2)-1} mm and equal to or less than {(t1)+(t2)+1} mm.

Meanwhile, according to the embodiment, the first height h1 and/or the first distance may be values which are calculated by a control unit included in the electrode assembly manufacturing apparatus including a tab guide 200 and/or a pre-welding device 300, or values which are inputted from a user or received from an external device.

Further, the thickness h0, the first thickness t1, and/or the second thickness t2 of the electrode assembly 100 are measured by a measuring unit included in the above-mentioned electrode assembly manufacturing apparatus, or may be values which are inputted from the user or received from an external device.

Therefore, the electrode assembly manufacturing method (S1000) of the embodiment may include a step (S1100) of obtaining the first height h1, prior to the step of adjusting the centering position of the tab guide 200 to the first height h1. Here, the step of obtaining the first height h1 may be embodied as a step of receiving the first height h1 via an input unit or from an external device via a communication unit. Alternatively, the step of obtaining the first height h1 can be embodied as a step of calculating the first height h1. At this time, the step of calculating the first height h1 can be performed by a control unit.

Here, the step of calculating the first height h1 may comprise a step of obtaining a first distance and a step of calculating the first height based on the first distance. At this time, the step of obtaining the first distance may be embodied in a step of receiving a first distance from a user via an input unit or receiving it from an external device via a communication unit. Alternatively, the step of obtaining the first distance can be embodied in the step of calculating the first distance. At this time, the step of calculating the first distance may be performed by the control unit.

Here, the step of calculating the first distance may comprise a step of obtaining the thickness h0, the first thickness t1, and/or the second thickness t2 of the electrode assembly 100, and a step of calculating the first distance based on the obtained values. At this time, the step of obtaining the thickness h0, the first thickness t1 and/or the second thickness t2 of the electrode assembly 100 can be embodied in a step of measuring the corresponding value via a measurement unit, or receiving an input from a user through an input unit, or receiving an input from an external device via a communication unit.

In step (S1200), the tab guide 200 may form the tab gathering part 114 by pressing the electrode tab of the electrode assembly.

Step S1200 may comprises a step of inserting a cathode tab 112 between the first guide 210 and the second guide 220, a step of moving the first guide 210 and the second guide 220 toward each other, a step of pressing the cathode tab 112 and a step of forming the tab gathering part 114 on the cathode tab 112.

In step (S1300), the densely gathered electrode tabs may be coupled to form the tab coupling part 115. The tab coupling part 115 may be joined by welding. The pre-welding device 300 may form the tab coupling part 115 by heating the electrode tabs that are densely gathered through welding.

Step (S1300) may comprise a step of heating the densely gathered cathode tabs 112 by the pre-welding device 300 and a step of forming the tab coupling part 115 on the cathode tabs 112.

Meanwhile, the electrode assembly 100 of the present embodiment described above may be stored in a cell case together with an electrolyte solution and provided as a battery cell.

A battery cell according to an embodiment of the present disclosure may include an electrode assembly 100 in which a plurality of electrodes and a plurality of separators are alternately stacked, electrode leads connected to electrode tabs extending from a plurality of electrodes, and a cell case that seals the electrode assembly in a state where one end of the electrode lead protrudes.

Meanwhile, the above-mentioned battery cell can be stacked in one direction to form a battery cell stack, and a battery pack can be formed together with a battery management system (BMS) and/or a cooling device that is modularized into a battery module and manages the temperature or voltage of the battery. The battery pack can be applied to various devices. For example, the device to which the battery pack is applied may be a vehicle means such as an electric bicycle, an electric vehicle, or a hybrid vehicle, but the present disclosure is not limited thereto, and the battery pack according to the present embodiment can be used for various devices in addition to the above illustrations, which also falls within the scope of the present disclosure.

### [Description of Reference Numerals]

100: electrode assembly
110: cathode
112: cathode tab
120: anode
130: separator
200: tab guide
300: pre-welding device

## Claims

1. An electrode assembly (100) comprising:
a cathode (110), an anode (120), and a separator (130) interposed between the cathode (110) and the anode (120),
wherein an electrode tab extending from the cathode (110) or the anode (120) includes a tab gathering part (114) in which a plurality of electrode tabs are pressed and gathered at one point,
wherein a lower surface of the tab gathering part (114) has a first height (h1) with respect to one surface of the electrode assembly (100) based on the stacking direction of the electrode assembly (100),
wherein the first height (h1) is a difference value between a thickness (h0) of the electrode assembly (100) and a first distance, and
wherein the first distance is a value having a difference of within 1 mm from the sum of the thickness of the tab gathering part and the thickness of the half-cell located at the outermost part of the electrode assembly, and
wherein the electrode tab extends from an electrode having a polarity opposite to that of the electrode included in the half-cell located at the outermost part.

2. The electrode assembly (100) according to claim 1, wherein:
the electrode tab is a tab extending from either the cathode (110) or the anode (120), and
the half-cell located at the outermost part includes another electrode of the cathode (110) or the anode (120).

3. The electrode assembly according to claim 1, wherein:
the electrode tab is a cathode tab connected to the cathode.

4. The electrode assembly according to claim 1, wherein:
the first height is greater than 6.2 mm and less than 8.2 mm.

5. The electrode assembly according to claim 1, wherein:
the first height is 6.3 mm or more and 8.1 mm or less.

6. A manufacturing method of an electrode assembly which is performed by an electrode assembly manufacturing apparatus including a tab guide, the manufacturing method comprising:
adjusting a centering position of a tab guide to a first height,
pressing electrode tabs of the electrode assembly by the tab guide to form a tab gathering portion, and
coupling the electrode tabs which are densely gathered to form a tab coupling part,
wherein the first height is a difference value between a thickness of the electrode assembly and a first distance, and
wherein the first distance is a value having a difference of within 1 mm from the sum of the thickness of the tab gathering part and the thickness of a half-cell located at the outermost part of the electrode assembly,
wherein the electrode tab extends from an electrode having a polarity opposite to that of an electrode included in the half cell located at the outermost part.

7. The manufacturing method according to claim 6, wherein:
the electrode tab is a tab extending from either the cathode or the anode, and
the half-cell located at the outermost part includes another electrode of the cathode or the anode.

8. The manufacturing method according to claim 6, wherein:
prior to the step of adjusting the centering position to the first height, the method further comprises calculating the first height.

9. The manufacturing method according to claim 6, wherein:
prior to the step of adjusting the centering position to the first height, the method further comprises:
calculating the first distance, and
calculating the first height based on the calculated first distance.

10. A battery cell comprising the electrode assembly as set forth in claim 1.

11. A pouch-type battery cell comprising the electrode assembly as set forth in claim 1.

## Patentansprüche

1. Elektrodenanordnung (100), umfassend:
eine Kathode (110), eine Anode (120) und einen Separator (130), welcher zwischen der Kathode (110) und der Anode (120) eingefügt ist,
wobei eine Elektrodenlasche, welche sich von der Kathode (110) oder der Anode (120) erstreckt, einen Laschenzusammenführungsteil (114) umfasst, in welchem eine Mehrzahl von Elektrodenlaschen an einem Punkt gepresst und zusammengeführt sind,
wobei eine untere Fläche des Laschenzusammenführungsteils (114) auf Grundlage der Stapelrichtung der Elektrodenanordnung (100) in Bezug auf eine Fläche der Elektrodenanordnung (100) eine erste Höhe (h1) aufweist,
wobei die erste Höhe (h1) ein Differenzwert zwischen einer Dicke (h0) der Elektrodenanordnung (100) und einem ersten Abstand ist und
wobei der erste Abstand ein Wert ist, welcher eine Differenz von innerhalb 1 mm zu der Summe der Dicke des Laschenzusammenführungsteils und der Dicke der an dem äußersten Teil der Elektrodenanordnung befindlichen Halbzelle aufweist, und
wobei sich die Elektrodenlasche von einer Elektrode erstreckt, welche eine Polarität aufweist, die entgegengesetzt zu der Polarität der Elektrode ist, welche in der an dem äußersten Teil befindlichen Halbzelle umfasst ist.

2. Elektrodenanordnung (100) nach Anspruch 1, wobei:
die Elektrodenlasche eine Lasche ist, welche sich von entweder der Kathode (110) oder der Anode (120) erstreckt, und die an dem äußersten Teil befindliche Halbzelle eine andere Elektrode aus der Kathode (110) oder der Anode (120) umfasst.

3. Elektrodenanordnung nach Anspruch 1, wobei
die Elektrodenlasche eine Kathodenlasche ist, welche mit der Kathode verbunden ist.

4. Elektrodenanordnung nach Anspruch 1, wobei:
die erste Höhe größer als 6,2 mm und kleiner als 8,2 mm ist.

5. Elektrodenanordnung nach Anspruch 1, wobei:
die erste Höhe 6,3 mm oder mehr und 8,1 mm oder weniger beträgt.

6. Herstellungsverfahren für eine Elektrodenanordnung, welches durch eine Elektrodenanordnungs-Herstellungsvorrichtung durchgeführt wird, welche eine Laschenführung umfasst, wobei das Herstellungsverfahren umfasst:
Einstellen einer Zentrierposition einer Laschenführung auf eine erste Höhe,
Pressen von Elektrodenlaschen der Elektrodenanordnung durch die Laschenführung, um einen Laschenzusammenführungsabschnitt zu bilden, und
Koppeln der Elektrodenlaschen, welche dicht zusammengeführt sind, um einen Laschenkopplungsteil zu bilden,
wobei die erste Höhe ein Differenzwert zwischen einer Dicke der Elektrodenanordnung und einem ersten Abstand ist und
wobei der erste Abstand ein Wert ist, welcher eine Differenz von innerhalb 1 mm zu der Summe der Dicke des Laschenzusammenführungsteils und der Dicke einer an dem äußersten Teil der Elektrodenanordnung befindlichen Halbzelle aufweist,
wobei sich die Elektrodenlasche von einer Elektrode erstreckt, welche eine Polarität aufweist, die entgegengesetzt zu der Polarität einer Elektrode ist, welche in der an dem äußersten Teil befindlichen Halbzelle umfasst ist.

7. Herstellungsverfahren nach Anspruch 6, wobei:
die Elektrodenlasche eine Lasche ist, welche sich von entweder der Kathode oder der Anode erstreckt, und
die an dem äußersten Teil befindliche Halbzelle eine andere Elektrode aus der Kathode oder der Anode umfasst.

8. Herstellungsverfahren nach Anspruch 6, wobei:
vor dem Schritt des Einstellens der Zentrierposition auf die erste Höhe das Verfahren ferner ein Berechnen der ersten Höhe umfasst.

9. Herstellungsverfahren nach Anspruch 6, wobei:
vor dem Schritt des Einstellens der Zentrierposition auf die erste Höhe das Verfahren ferner umfasst:
Berechnen des ersten Abstands und
Berechnen der ersten Höhe auf Grundlage des berechneten ersten Abstands.

10. Batteriezelle, umfassend die Elektrodenanordnung nach Anspruch 1.

11. Beuteltyp-Batteriezelle, umfassend die Elektrodenanordnung nach Anspruch 1.

## Revendications

1. Ensemble d'électrodes (100) comprenant :
une cathode (110), une anode (120) et un séparateur (130) interposé entre la cathode (110) et l'anode (120),
dans lequel une languette d'électrode s'étendant à partir de la cathode (110) ou de l'anode (120) comporte une partie de rassemblement de languettes (114) dans laquelle une pluralité de languettes d'électrode sont pressées et rassemblées en un point,
dans lequel une surface inférieure de la partie de rassemblement de languettes (114) présente une première hauteur (h1) par rapport à une surface de l'ensemble d'électrodes (100) sur la base de la direction d'empilement de l'ensemble d'électrodes (100),
dans lequel la première hauteur (h1) est une valeur de différence entre une épaisseur (h0) de l'ensemble d'électrodes (100) et une première distance, et
dans lequel la première distance est une valeur présentant une différence de moins de 1 mm par rapport à la somme de l'épaisseur de la partie de rassemblement de languettes et de l'épaisseur de la demi-cellule située au niveau de la partie la plus externe de l'ensemble d'électrodes, et
dans lequel la languette d'électrode s'étend à partir d'une électrode présentant une polarité opposée à celle de l'électrode incluse dans la demi-cellule située au niveau de la partie la plus externe.

2. Ensemble d'électrodes (100) selon la revendication 1, dans lequel :
la languette d'électrode est une languette s'étendant soit à partir de la cathode (110), soit à partir de l'anode (120), et
la demi-cellule située au niveau de la partie la plus externe comporte une autre électrode de la cathode (110) ou de l'anode (120).

3. Ensemble d'électrodes selon la revendication 1, dans lequel
la languette d'électrode est une languette de cathode connectée à la cathode.

4. Ensemble d'électrodes selon la revendication 1, dans lequel
la première hauteur est supérieure à 6,2 mm et inférieure à 8,2 mm.

5. Ensemble d'électrodes selon la revendication 1, dans lequel
la première hauteur est de 6,3 mm ou plus et de 8,1 mm ou moins.

6. Procédé de fabrication d'un ensemble d'électrodes qui est réalisé par un appareil de fabrication d'ensemble d'électrodes comportant un guide de languettes, le procédé de fabrication comprenant :
le réglage d'une position de centrage d'un guide de languettes à une première hauteur, le pressage des languettes d'électrode de l'ensemble d'électrodes par le guide de languettes pour former une partie de rassemblement de languettes, et
le couplage des languettes d'électrode qui sont densément rassemblées pour former une partie de couplage de languettes, dans lequel la première hauteur est une valeur de différence entre une épaisseur de l'ensemble d'électrodes et une première distance, et
dans lequel la première distance est une valeur présentant une différence de moins de 1 mm par rapport à la somme de l'épaisseur de la partie de rassemblement de languettes et de l'épaisseur d'une demi-cellule située au niveau de la partie la plus externe de l'ensemble d'électrodes,
dans lequel la languette d'électrode s'étend à partir d'une électrode présentant une polarité opposée à celle d'une électrode incluse dans la demi-cellule située au niveau de la partie la plus externe.

7. Procédé de fabrication selon la revendication 6, dans lequel :
la languette d'électrode est une languette s'étendant soit à partir de la cathode, soit à partir de l'anode, et
la demi-cellule située au niveau de la partie la plus externe comporte une autre électrode de la cathode ou de l'anode.

8. Procédé de fabrication selon la revendication 6, dans lequel :
avant l'étape de réglage de la position de centrage à la première hauteur, le procédé comprend en outre le calcul de la première hauteur.

9. Procédé de fabrication selon la revendication 6, dans lequel :
avant l'étape de réglage de la position de centrage à la première hauteur, le procédé comprend en outre :
le calcul de la première distance, et
le calcul de la première hauteur sur la base de la première distance calculée.

10. Cellule de batterie comprenant l'ensemble d'électrodes selon la revendication 1.

11. Cellule de batterie de type poche comprenant l'ensemble d'électrodes selon la revendication 1.
